# EUROPÄISCHE PATENTSCHRIFT

(11) **EP 2 861 881 B1**
(45) Veröffentlichungstag und Bekanntmachung des Hinweises auf die Patenterteilung: **04.11.2020**
(21) Anmeldenummer: 13735219.1
(22) Anmeldetag: 14.06.2013
(51) Int. Cl.: F16C 33/46, F16C 33/50, F16C 33/66, F16C 19/36

(54) **KEGELROLLENLAGERKÄFIG**
TAPERED ROLLER BEARING CAGE
CAGE DE PALIER À ROULEAUX CONIQUES

(30) Priorität: 15.06.2012 DE 102012210080
(43) Veröffentlichungstag der Anmeldung: 22.04.2015
(73) Patentinhaber: Aktiebolaget SKF, 415 50 Göteborg (SE)
(72) Erfinder: BECK, Burkard, 97294 Unterpleichfeld (DE); SCHNEIDER, Werner, 97488 Stadtlauringen (DE); WEIGLEIN, Jürgen, 97714 Oerlenbach (DE)
(74) Vertreter: Kuhstrebe, Jochen
(86) Internationale Anmeldenummer: PCT/EP2013/062441
(87) Internationale Veröffentlichungsnummer: WO 2013/186387

(56) Entgegenhaltungen:
- EP-A1- 0 897 064
- DE-A1-102004 031 027
- DE-A1-102008 053 248
- JP-A- 2012 052 559
- US-A- 2 978 282

## Beschreibung

Die Erfindung betrifft einen Wälzlagerkäfig, umfassend einen ersten Seitenring und einen zweiten Seitenring, die um eine Achse angeordnet sind, wobei sich zwischen dem ersten Seitenring und dem zweiten Seitenring eine Anzahl Stege erstreckt, so dass eine der Anzahl der Stege entsprechende Anzahl Aufnahmetaschen für Wälzkörper ausgebildet wird, wobei jeder Seitenring eine radiale Erstreckung aufweist, wobei zwischen zwei benachbarten Stegen eine Umfangserstreckung vorliegt, so dass jeder Seitenring zwischen zwei benachbarten Stegen in Achsrichtung gesehen eine der Aufnahmetasche zugewandte Projektionsfläche aufweist, wobei jeder Seitenring an seiner der Aufnahmetasche zugewandten Seite eine Anlauffläche für einen Wälzkörper aufweist, wobei die Anlauffläche für einen Wälzkörper höchstens 95 % der Projektionsfläche beträgt, wobei die Anlauffläche als gegenüber der restlichen der Aufnahmetasche zugewandten Oberfläche des Seitenrings erhabenes Plateau ausgebildet ist.

Wälzlagerkäfige dieser Art sind bekannt. Die Stege des Käfigs, die die Seitenringe verbinden, ermöglichen eine Führung des Wälzkörpers, beispielsweise einer Zylinder- oder einer Kegelrolle, entlang einer Mantellinie. Darüber hinaus bedarf es einer axialen Führung der Rolle in der Aufnahmetasche. Hierfür weisen die Seitenringe in demjenigen Abschnitt, der dem Inneren der Aufnahmetasche zugewandt ist, eine Anlauffläche für den Wälzkörper auf.

Ein gattungsgemäßer Wälzlagerkäfig ist in der DE 10 2008 053 248 A1 offenbart. Ähnliche und andere Lösungen zeigen die US 2 978 282 A**,** die DE 10 2004 031 027 A1 und die EP 0 897 064 A1**.**

Für eine gute und dauerhafte Führung des Wälzkörpers in der Aufnahmetasche des Käfigs sowie für einen reibungsarmen Betrieb ist es nötig, die Flächen zwischen Käfig und Wälzkörper, die sich relativ zueinander bewegen, mit Schmiermittel zu versorgen. Damit soll die Reibleistung im Betrieb des Wälzlagers minimiert werden.

Vorbekannte Käfige weisen diesbezüglich mitunter den Nachteil auf, dass es schwierig ist, die Bereiche besagter Relativbewegung hinreichend mit Schmiermittel, insbesondere mit Schmierfett, zu versorgen. Auch ist mitunter die Reibung, die sich bei axialem Anlauf der Rolle an der Aufnahmetasche ergibt, nicht vernachlässigbar.

Der Erfindung liegt die **Aufgabe** zugrunde, einen Kegelrollenlagerkäfig der eingangs genannten Art so fortzubilden, dass eine verbesserte Führung der Kegelrollen bei reduzierter Reibung möglich ist, was durch eine verbesserte Schmierstoffversorgung und verbesserte Kontaktverhältnisse erreicht werden soll.

Die **Lösung** dieser Aufgabe durch die Erfindung ist dadurch gekennzeichnet, dass die Anlaufflächen eine ebene Oberfläche aufweisen, die parallel zur außenliegenden Stirnseite der Seitenringe verläuft, wobei die Anlauffläche des einen Seitenrings im Wesentlichen rechteckig bzw. leicht trapezförmig ausgebildet ist, während die Anlauffläche des anderen Seitenrings kreisförmig ausgebildet ist, so dass ein vergrößertes Schmiermittelreservoir am zweiten Seitenring im Vergleich zum ersten Seitenring ausgebildet ist, und wobei die Anlaufflächen - ebenfalls zur Schaffung eines hinreichenden Schmierstoffreservoirs - von den Stegen und von den radialen Enden der Seitenringe beabstandet ist.

Die Anlauffläche für einen Wälzkörper beträgt dabei bevorzugt höchstens 90 %, vorzugsweise sogar höchstens 80 %, der Projektionsfläche.

Die Anlauffläche kann mit einem Rundungsradius in die restliche der Aufnahmetasche zugewandten Oberfläche des Seitenrings übergehen.

Die Anlauffläche weist bevorzugt von der axial am weitesten von der Aufnahmetasche entfernten Stelle des Seitenrings eine Höhe von mindestens 0,5 mm, vorzugsweise von mindestens 1,0 mm, auf.

Der Wälzlagerkäfig ist bevorzugt als Massivkäfig ausgebildet, wobei der Käfig insbesondere aus Kunststoff besteht.

Mit der vorgeschlagenen Ausgestaltung eines Wälzlagerkäfigs wird sichergestellt, dass sich ein hinreichend großes Fettreservoir im axialen Endbereich der Aufnahmetasche für den Wälzkörper bildet, so dass insoweit die Schmierung des Wälzkörpers im Käfig zunächst verbessert ist. Gleichzeitig ergibt sich eine reduzierte und definierte axiale Anlauffläche des Wälzkörpers am stirnseitigen Ende der Aufnahmetasche; die reibende Kontaktfläche zwischen Wälzkörper und Aufnahmetasche ist insoweit vermindert.

Insgesamt führt dies zu einer verbesserten Führung und zu einem verbesserten Lauf der Wälzkörper in den Käfig-Aufnahmetaschen.

In der Zeichnung sind Ausführungsbeispiele der Erfindung dargestellt. Es zeigen:
- Fig. 1: einen teilweisen Radialschnitt durch einen Kegelrollenlagerkäfig,
- Fig. 2: den Schnitt C-C gemäß Fig. 1,
- Fig. 3: eine perspektivische Darstellung eines Teils des Kegelrollenlagerkäfigs im Bereich des Schnitts gemäß Fig. 2,
- Fig. 4: den Schnitt B-B gemäß Fig. 1,
- Fig. 5: eine perspektivische Darstellung eines Teils des Kegelrollenlagerkäfigs im Bereich des Schnitts gemäß Fig. 4,
- Fig. 6: einen Ausschnitt aus einem Wälzlagerkäfig, wobei der Bereich zwischen zwei Stegen gemäß dem Schnitt D-D nach Fig. 1 dargestellt ist,
- Fig. 7: eine perspektivische Darstellung eines Kegelrollenlagerkäfigs in einer alternativen Ausführung,
- Fig. 8: eine perspektivische Darstellung des Bereichs C gemäß Fig. 7,
- Fig. 9: eine perspektivische Darstellung des Bereichs D gemäß Fig. 7,
- Fig. 10: eine Seitenansicht eines Kegelrollenlagerkäfigs gemäß einer weiteren Ausführungsform.
- Fig. 11: einen Teil des Schnitts A-A gemäß Fig. 10,
- Fig. 12: das Detail "X" gemäß Fig. 11,
- Fig. 13: das Detail "Y" gemäß Fig. 11,
- Fig. 14: eine perspektivische Darstellung eines Teils des Kegelrollenlagerkäfigs im Bereich des Details "X", gesehen von einer ersten Seite, und
- Fig. 15: eine perspektivische Darstellung des Teils des Kegelrollenlagerkäfigs im Bereich des Details "X" gemäß Fig. 14, gesehen von einer anderen Seite.

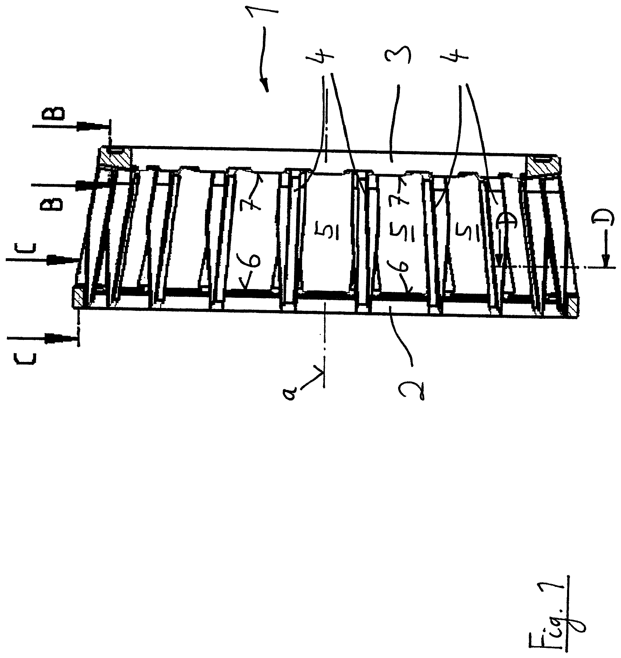

In Fig. 1 ist ein Wälzlagerkäfig 1 in Form eines Kegelrollenlagerkäfigs zu sehen. Der Käfig 1 weist zwei Seitenringe 2, 3 auf, die über eine Anzahl Stege 4 miteinander verbunden sind. Der Käfig ist vorliegend als Massivkäfig aus Kunststoff ausgeführt. Die Drehachse des Käfigs ist mit a angegeben.

Durch die Stege 4 werden die Aufnahmetaschen 5 für die (nicht dargestellten) Wälzkörper, d. h. für die Kegelrollen, ausgebildet.

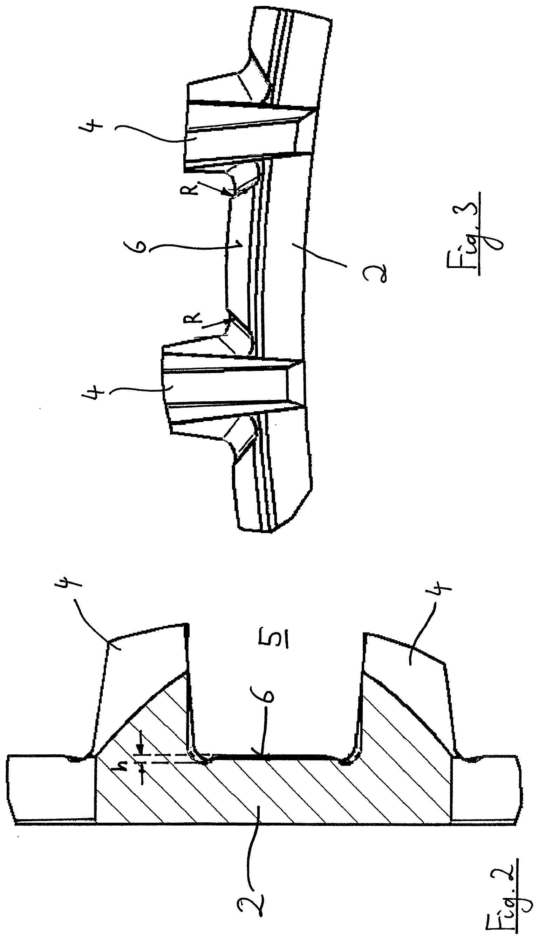

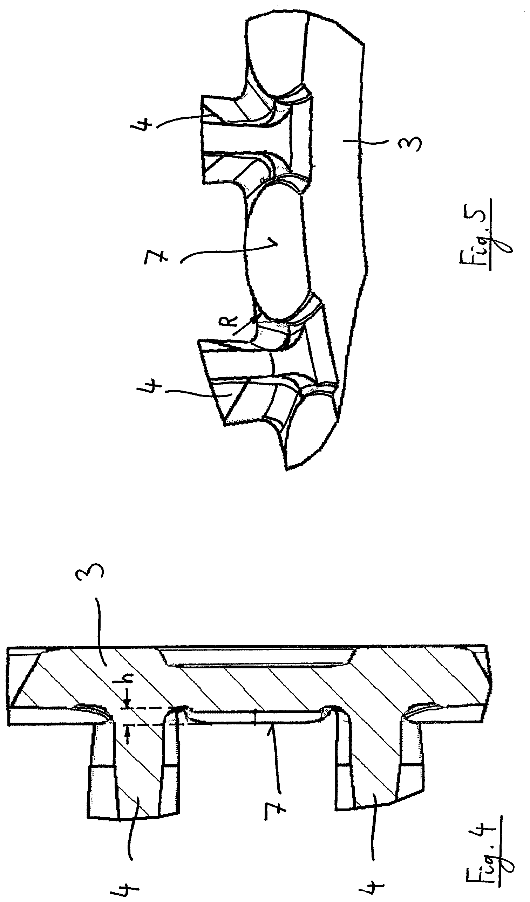

In den Figuren 2 bis 5 sind in weiteren Schnitten bzw. Teilansichten des Käfigs gemäß Fig. 1 verschiedene Einzelheiten zu erkennen. Wesentlich ist, dass jede Aufnahmetasche 5 in ihren axialen Endbereich so ausgeführt ist, dass sich eine Anlauffläche 6 am einen Seitenring 2 und 7 am anderen Seitenring 3 ausbildet. Wie in Fig. 3 zu sehen ist, ist diese Anlauffläche 6 am Seitenring 2 vorliegend im wesentlichen rechteckig bzw. leicht trapezförmig ausgebildet, während die Anlauffläche 7 am Seitenring 3 - s. hierzu Fig. 5 - kreisförmig ausgebildet ist.

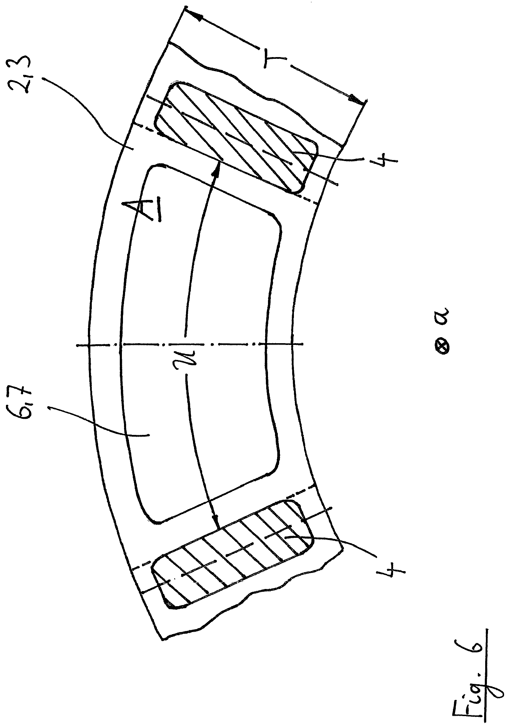

Jeder Seitenring 2, 3 hat - wie es sich aus der zugehörigen schematischen Darstellung gemäß Fig. 6 ergibt - eine radiale Erstreckung T; weiterhin liegt zwischen zwei benachbarten Stegen 4 eine Umfangserstreckung U vor. Demgemäß lässt sich für jeden Seitenring 2, 3 zwischen zwei benachbarten Stegen 4 - in Achsrichtung a gesehen - eine der Aufnahmetasche 5 zugewandte Projektionsfläche A definieren. Die vorgesehenen Anlaufflächen 6 bzw. 7 nehmen spezifisch nur einen Teil besagter Projektionsfläche ein.

Konkret ist vorgesehen, dass die Auflagefläche 6, 7 für den Wälzkörper höchstens 95 % der Projektionsfläche A beträgt. Die Anlauffläche 6, 7 ist dabei als Plateau ausgebildet, das gegenüber der restlichen Oberfläche des Seitenrings an der Seite, die der Aufnahmetasche 5 zugewandt ist, erhaben ist. Die Höhe des Plateaus 6, 7 ist mit h bezeichnet und in den Figuren 2 und 4 eingezeichnet.

Weiterhin ist ein Rundungsradius R an verschiedenen Stellen eingetragen, der angibt, dass der Abfall vom Plateau 6, 7 mit entsprechender Ausrundung erfolgen kann. Beispielsweise ist in Fig. 3 gut zu erkennen, dass durch besagte Ausrundung ein relativ großes Fettreservoir seitlich des Plateaus 6, 7 gebildet wird.

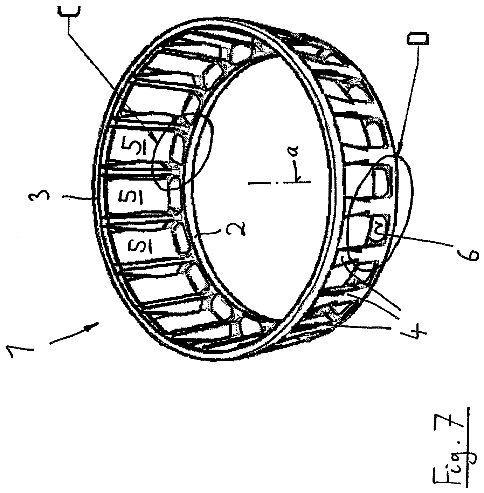

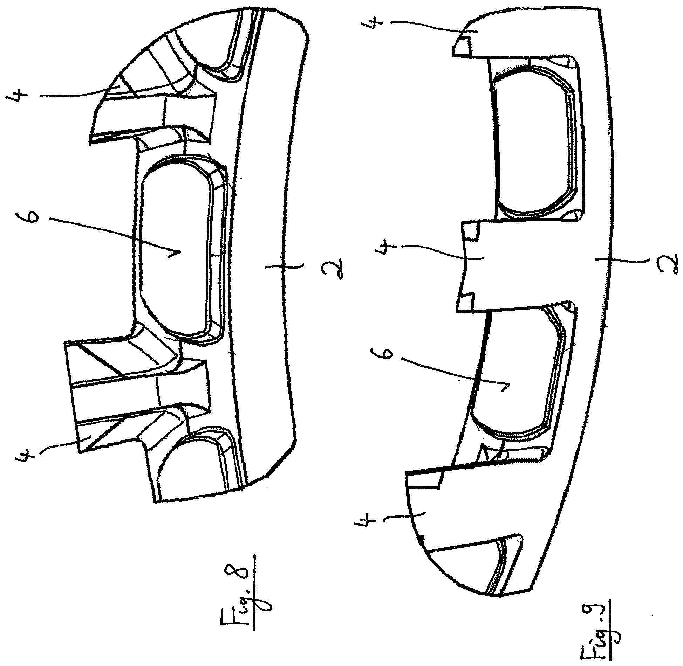

In den Figuren 7 bis 9 ist für eine andere Ausführungsform des Käfigs 1 die Ausformung der Anlaufflächen - hier der Fläche 6 - zu erkennen. Die Anlauffläche 6 ist hier leicht oval ausgebildet und nimmt wiederum nur einen Teil der Projektionsfläche ein, die durch die radiale Erstreckung der Seitenringe 2, 3 und den Umfangsabstand der Stege 4 gebildet wird.

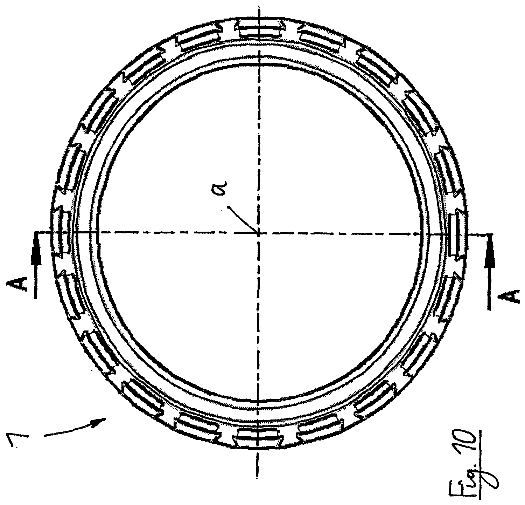

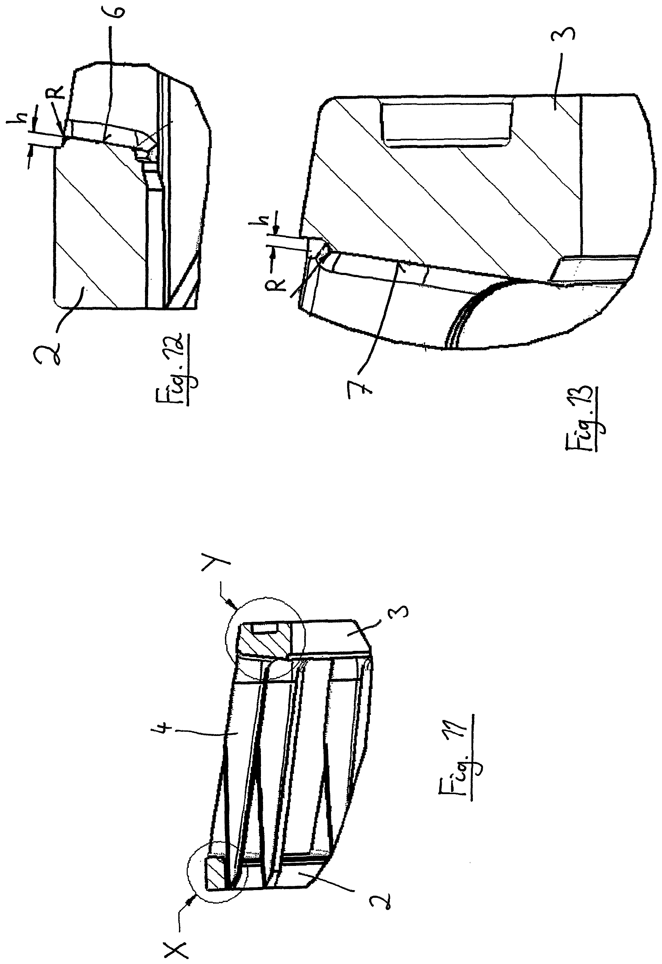

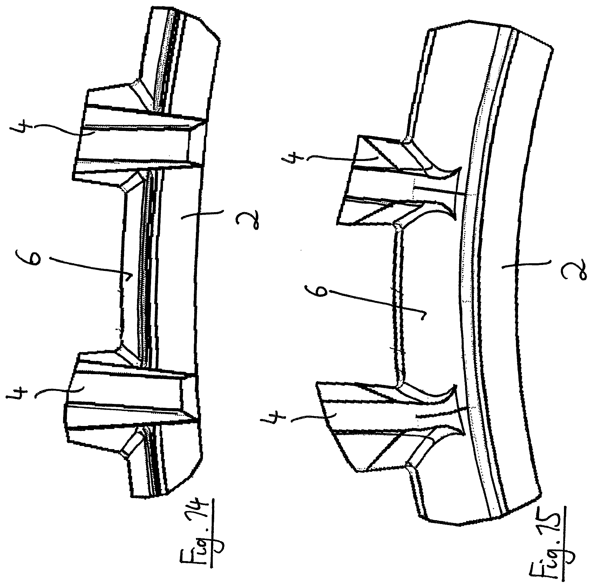

Ähnliches gilt für das Ausführungsbeispiel nach den Figuren 10 bis 15, wo wiederum ersichtlich ist, dass ein erhabenes Plateau gebildet wird, das die axialen Anlaufflächen 6, 7 für die Wälzkörper bildet.

### Bezugszeichenliste

- 1: Wälzlagerkäfig
- 2: Seitenring
- 3: Seitenring
- 4: Steg
- 5: Aufnahmetasche
- 6: Anlauffläche
- 7: Anlauffläche

- a: Achse
- T: radiale Erstreckung des Seitenrings
- U: Umfangserstreckung zwischen zwei Seitenringen
- A: Projektionsfläche
- R: Rundungsradius
- h: Höhe

## Patentansprüche

1. Kegelrollenlagerkäfig (1), umfassend einen ersten Seitenring (2) und einen zweiten Seitenring (3), die um eine Achse (a) angeordnet sind, wobei der erste Seitenring (2) einen größeren Durchmesser als der zweite Seitenring (3) aufweist, und sich zwischen dem ersten Seitenring (2) und dem zweiten Seitenring (3) eine Anzahl Stege (4) erstreckt, so dass eine der Anzahl der Stege (4) entsprechende Anzahl Aufnahmetaschen (5) für Wälzkörper ausgebildet wird, wobei jeder Seitenring (2, 3) eine radiale Erstreckung (T) aufweist, wobei zwischen zwei benachbarten Stegen (4) eine Umfangserstreckung (U) vorliegt, so dass jeder Seitenring (2, 3) zwischen zwei benachbarten Stegen (4) in Achsrichtung (a) gesehen eine der Aufnahmetasche (4) zugewandte Projektionsfläche (A) aufweist, wobei jeder Seitenring (2, 3) an seiner der Aufnahmetasche (5) zugewandten Seite eine Anlauffläche (6, 7) für einen Wälzkörper aufweist, wobei die Anlauffläche (6, 7) für einen Wälzkörper höchstens 95 % der Projektionsfläche (A) beträgt, wobei die Anlauffläche (6, 7) als gegenüber der restlichen der Aufnahmetasche (5) zugewandten Oberfläche des Seitenrings (2, 3) erhabenes Plateau ausgebildet ist,
**dadurch gekennzeichnet,**
**dass** die Anlaufflächen (6, 7) eine ebene Oberfläche aufweisen, die parallel zur außenliegenden Stirnseite der Seitenringe (2, 3) verläuft, wobei die Anlauffläche (6) an dem ersten Seitenring (2) im Wesentlichen rechteckig bzw. leicht trapezförmig ausgebildet ist, während die Anlauffläche (7) am zweiten Seitenring (3) kreisförmig ausgebildet ist, so dass ein vergrößertes Schmiermittelreservoir am zweiten Seitenring (3) im Vergleich zum ersten Seitenring (2) ausgebildet ist, und wobei die Anlaufflächen (6, 7) von den Stegen (4) und von den radialen Enden der Seitenringe (2, 3) beabstandet sind.

2. Kegelrollenlagerkäfig nach Anspruch 1, **dadurch gekennzeichnet, dass** die Anlauffläche (6, 7) für einen Wälzkörper höchstens 90 %, vorzugsweise höchstens 80 %, der Projektionsfläche (A) beträgt.

3. Kegelrollenlagerkäfig nach Anspruch 1 oder 2, **dadurch gekennzeichnet, dass** die Anlauffläche (6, 7) mit einem Rundungsradius (R) in die restliche der Aufnahmetasche (5) zugewandten Oberfläche des Seitenrings (2, 3) übergeht.

4. Kegelrollenlagerkäfig nach einem der Ansprüche 1 bis 3, **dadurch gekennzeichnet, dass** die Anlauffläche (6, 7) von der axial am weitesten von der Aufnahmetasche entfernten Stelle des Seitenrings (2, 3) eine Höhe (h) von mindestens 0,5 mm, vorzugsweise von mindestens 1,0 mm, aufweist.

5. Kegelrollenlagerkäfig nach einem der Ansprüche 1 bis 4, **dadurch gekennzeichnet, dass** er als Massivkäfig ausgebildet ist, wobei der Käfig vorzugsweise aus Kunststoff besteht.

## Claims

1. Tapered roller bearing cage (1), comprising a first side ring (2) and a second side ring (3) which are arranged about an axis (a), wherein the first side ring (2) has a larger diameter than the second side ring (3), and a number of webs (4) extend between the first side ring (2) and the second side ring (3), with the result that a number of receiving pockets (5) for rolling bodies that corresponds to the number of webs (4) is formed, wherein each side ring (2, 3) has a radial extent (T), wherein a circumferential extent (U) is present between two adjacent webs (4), with the result that, as seen in the axial direction (a), each side ring (2, 3) has, between two adjacent webs (4), a projection surface (A) which faces towards the receiving pocket (4), wherein each side ring (2, 3) has, on its side facing towards the receiving pocket (5), an abutment face (6, 7) for a rolling body, wherein the abutment face (6, 7) for a rolling body is at most 95% of the projection surface (A), wherein the abutment face (6, 7) is formed as a raised plateau with respect to the remainder of the surface of the side ring (2, 3) that faces towards the receiving pocket (5),
**characterized**
**in that** the abutment faces (6, 7) have a planar surface which extends parallel to the outer end side of the side rings (2, 3), wherein the abutment face (6) on the first side ring (2) is substantially rectangular or slightly trapezoidal in form, whereas the abutment face (7) on the second side ring (3) is circular in form, with the result that a larger lubricant reservoir on the second side ring (3) than on the first side ring (2) is formed, and wherein the abutment faces (6, 7) are spaced apart from the webs (4) and from the radial ends of the side rings (2, 3).

2. Tapered roller bearing cage according to Claim 1, **characterized in that** the abutment face (6, 7) for a rolling body is at most 90%, preferably at most 80%, of the projection surface (A).

3. Tapered roller bearing cage according to Claim 1 or 2, **characterized in that** the abutment face (6, 7) transitions with a roundness radius (R) into the remainder of the surface of the side ring (2, 3) that faces towards the receiving pocket (5).

4. Tapered roller bearing cage according to one of Claims 1 to 3, **characterized in that** the abutment face (6, 7) has a height (h) of at least 0.5 mm, preferably of at least 1.0 mm, from the point on the side ring (2, 3) that is axially furthest away from the receiving pocket.

5. Tapered roller bearing cage according to one of Claims 1 to 4, **characterized in that** it is designed as a massive cage, wherein the cage preferably consists of plastic.

## Revendications

1. Cage de palier à roulement (1), comprenant une première bague latérale (2) et une deuxième bague latérale (3), qui sont agencées autour d'un axe (a), la première bague latérale (2) présentant un plus grand diamètre que la deuxième bague latérale (3), et un nombre de traverses (4) s'étendant entre la première bague latérale (2) et la deuxième bague latérale (3), de telle sorte qu'un nombre de poches de réception (5) pour corps de roulement qui correspond au nombre de traverses (4) soient formées, chaque bague latérale (2, 3) présentant une étendue radiale (T), une étendue périphérique (U) se trouvant entre deux traverses (4) voisines, de telle sorte que chaque bague latérale (2, 3) présente une surface de projection (A) orientée vers la poche de réception (4) entre deux traverses (4) voisines vue dans la direction de l'axe (a), chaque bague latérale (2, 3) présentant une surface d'appui (6, 7) pour un corps de roulement sur son côté orienté vers la poche de réception (5), la surface d'appui (6, 7) pour un corps de roulement représentant au plus 95 % de la surface de projection (A), la surface d'appui (6, 7) étant configurée sous la forme d'un plateau surélevé par rapport au reste de la surface de la bague latérale (2, 3) orientée vers la poche de réception (5),
**caractérisée en ce que**
les surfaces d'appui (6, 7) présentent une surface plane, qui s'étend parallèlement au côté frontal extérieur des bagues latérales (2, 3), la surface d'appui (6) étant configurée au niveau de la première bague latérale (2) essentiellement sous forme rectangulaire ou légèrement trapézoïdale, tandis que la surface d'appui (7) est configurée au niveau de la deuxième bague latérale (3) sous forme circulaire, de manière à former un réservoir de lubrifiant agrandi au niveau de la deuxième bague latérale (3) en comparaison de la première bague latérale (2), et les surfaces d'appui (6, 7) étant espacées par les traverses (4) et par les extrémités radiales des bagues latérales (2, 3) .

2. Cage de palier à roulement selon la revendication 1, **caractérisée en ce que** la surface d'appui (6, 7) pour un corps de roulement représente au plus 90 %, de préférence au plus 80 %, de la surface de projection (A) .

3. Cage de palier à roulement selon la revendication 1 ou 2, **caractérisée en ce que** la surface d'appui (6, 7) se transforme avec un rayon de courbure (R) en le reste de la surface de la bague latérale (2, 3) orientée vers la poche de réception (5).

4. Cage de palier à roulement selon l'une quelconque des revendications 1 à 3, **caractérisée en ce que** la surface d'appui (6, 7) présente à partir de l'emplacement de la bague latérale (2, 3) axialement le plus éloigné de la poche de réception une hauteur (h) d'au moins 0,5 mm, de préférence d'au moins 1,0 mm.

5. Cage de palier à roulement selon l'une quelconque des revendications 1 à 4, **caractérisée en ce qu'**elle est configurée sous la forme d'une cage massive, la cage étant de préférence constituée de matière plastique.
